# EUROPEAN PATENT SPECIFICATION

(11) **EP 0 712 779 B1**
(45) Date of publication and mention of the grant of the patent: **05.06.2002**
(21) Application number: 95118231.0
(22) Date of filing: 20.11.1995
(51) Int. Cl.: B62K 19/30, B62M 23/02

(54) **Battery holding structure**
Batteriehalterungsstruktur
Structure de support de batterie

(30) Priority: 18.11.1994 JP 28518294; 28.12.1994 JP 33903394
(43) Date of publication of application: 22.05.1996
(60) Divisional application: 98109548.2
(73) Proprietor: YAMAHA HATSUDOKI KABUSHIKI KAISHA, Iwata-shi Shizuoka-ken, 438 (JP)
(72) Inventor: Ishikawa, Satoshi, Iwata-shi, Shizuoka-ken, 438 (JP); Iwami, Kazuaki, Iwata-shi, Shizuoka-ken, 438 (JP); Ohira, Masaru, Iwata-shi, Shizuoka-ken, 438 (JP)
(74) Representative: Grünecker, Kinkeldey, Stockmair & Schwanhäusser Anwaltssozietät

(56) References cited:
- EP-A- 0 539 269
- EP-A- 0 590 674
- EP-A- 0 636 536
- EP-A- 0 686 549
- FR-A- 2 355 707
- JP-A- 5 319 104

## Description

This invention relates to a battery holding structure for use in motor vehicles, motorcycles and power-assisted bicycles according to the preamble of claim 1.

Electric motor vehicles using the electric motor as a device for providing power in place of the internal combustion engine have been proposed and put to practical use. Also in recent years, electric motor-assisted bicycles have been put to practical use as disclosed in Japanese Paten Application Hei (published March 14, 1990) 2-74491 in which both a human power drive system and an electric motor drive system are provided to assist the human power with the drive power of the electric motor. In the electric motor-assisted bicycle, the pedal force inputted from the pedal is detected, and the drive power of the electric motor is increased when burden on the human power is large so that the burden on the rider is alleviated.

Those motor vehicles and electric motor-assisted bicycles are provided with batteries for driving the electric motor. Since such batteries provide propelling power to the vehicle, unlike the batteries mounted on the vehicles utilizing the internal combustion engine, the batteries cannot be charged while the vehicle is being driven. Therefore, the batteries have to be charged after driving. For that purpose, portable batteries are convenient. For example, as for the electric motor-assisted bicycle, the batteries can be charged easily if the batteries can be brought into a house and charged, as is the case of a resident in a condominium where the location of storing the bicycle is distant from the location where a charger is located.

However, the conventional batteries mounted on the vehicle are not provided with means for preventing soiling by mud splash or dust from outside. Therefore, the batteries have to be cleaned before being brought into the house. Since batteries are mounted on the vehicle usually with screws, removal or mounting of the batteries takes much time and is cumbersome. Furthermore, if the wiring terminals of the batteries and the terminals on the vehicle side are exposed outside, they tend to deteriorate as they are wetted with rain water or covered with dust.

Further, a battery holding structure as indicated above is disclosed in EP 0 636 536 (A1) which is a document according to Article 54(3) EPC.

Accordingly, it is an objective of the present invention to provide an improved battery holding structure for a vehicle, in particular a power-assisted bicycle, which is capable to prevent batteries from dirt, to ease the recharge of the batteries and simultaneously always assure a reliable electrical connection between the battery holding structure and a power unit.

According to the invention, this objective is solved by a battery holding structure for a vehicle, in particular a power-assisted bicycle, comprising at least one battery, an inner box for accommodating said at least one battery, an outer box for supporting said inner box when inserted into the outer box, said outer box being adapted to be secured to said vehicle and electrically connectable to a power unit of said vehicle, whereas the outer box has a one side open main body to receive the inner box inserted through the open side and a lid for closing said open side so as to completely isolate the inside of the outer box from the outside.

Since the inner box is held in the outer box, it is protected from soiling by mud and dust while the outer box is mounted on the vehicle. Further, the batteries are removed together with the inner box and brought into the house or the like for recharging. In addition, the batteries can be mounted easily and reliably on the vehicle by simply putting the inner box into the outer box.

According to an advantageous embodiment of the invention, both boxes comprise electrical connecting means for electrically connecting both boxes with each other when said inner box is inserted into said outer box.

If it is possible to store the vehicle or bicycle in location having an external battery charging means, it is advantageous that the outer box comprising an electrical terminal adapted to be connected to said external battery charging means for recharging at least one battery disposed in said inner box with said inner box being accommodated in said outer box, whereby it is preferred to electrically connect said electrical terminal to an outer electrical supply terminal of the outer box adapted to be electrically connectable to the power unit.

According to a preferred and advantageous embodiment of the invention it is possible to simplify the respective electrical connections between the inner and outer boxes, as well as the power unit by providing that said electrical connecting means between the inner and outer boxes comprising a first terminal plate and socket holes located in the inner box and terminal plugs adapted to engage said socket holes and being secured to a second terminal plate are provided in connection with said outer box, so that upper ends of said terminal plugs are received by the socket holes when the inner box is completely inserted into said outer box.

Further, according to another embodiment of the invention the insertion of the inner box into the outer box is facilitated by providing the inner box with longitudinal ribs, adapted to extend in the direction of insertion of the inner box into the outer box, whereby it is advantageous to provide the inner box with a handle which is rotatably supported at the top portion of the inner box and comprises marking indications to facilitate the pre-orientation of the inner box with respect to the outer box for inserting said inner box in correct orientation into the outer box.

Other preferred embodiments of the present invention are laid down in the further dependent claims.

In the following, the present invention is explained in greater detail with respect to several embodiments thereof in conjunction with the accompanying drawings, wherein:
FIG. 1 is a side view, with the cover removed, of an electric motor-assisted bicycle provided a battery holding structure as an embodiment of this invention.
FIG. 2 is a side view of completed state of the electric motor-assisted bicycle sown in FIG. 1.
Fig. 3 is a sectional side view of the inner box of the embodiment,
FIG. 4 is a side view of the outer box of the embodiment.
FIG. 5 is a schematic wiring diagram within the outer box.
Fig. 6 shows a cross section as seen along the lines VI-VI of Fig. 3 on the terminal plate of the inner box
Fig. 7 is a fractional section front view of the terminal plate of the outer box.
FIG. 8 is a side view showing the relationship between the seat structure and the battery holding structure of the electric motor-assisted bicycle.
FIG. 9 is a side view of a modified embodiment.
FIG. 10 is a side view of another modified embodiment.
Fig. 11 is a side view of the inner box of a further modified embodiment.
Fig. 12 is a fractional view of the embodiment according to Fig. 11.

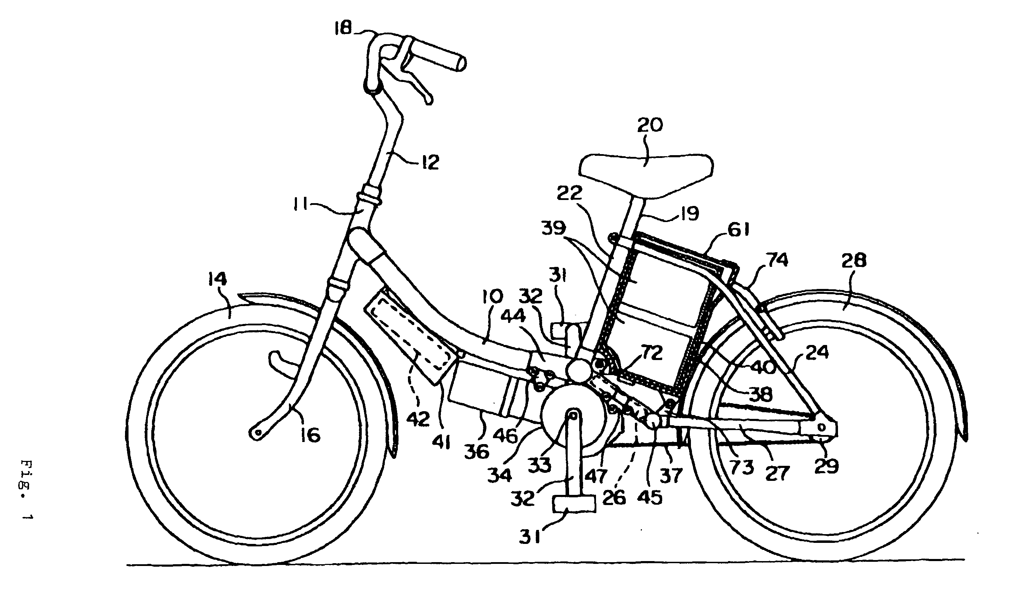

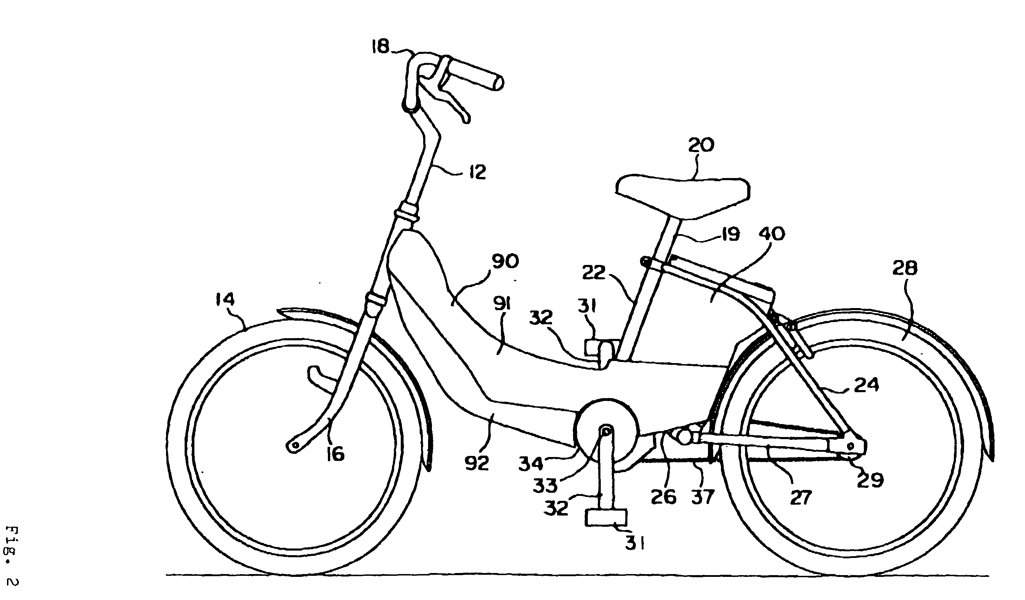

FIG. 1 shows a side cross section of an electric motor-assisted bicycle provided with a battery holding structure according to the invention, with a cover (90, FIG. 2) removed. In the figure are shown; a main tube (10), a head tube (11) secured to the front portion of the main tube (10), a handle stem (12) inserted into the head tube (11) for axial rotation therein, a front fork (16) secured to the lower portion of the handle stem (12), a front wheel (14) rotatably attached to the front fork (16), and handlebars (18) extending to right and left and secured to the upper portion of the handle stem (12).

The main tube (10) extends from front obliquely back downward and at its rear end is secured a middle lug (44) to which are secured a seat tube (22) and a rear tube (26). The main tube (10) is arched downward so that even a female rider in a skirt can easily straddle over the main tube (10) to ride the bicycle.

The seat tube (22) supports a seat post (19) to which a seat (20) is secured. Paired chain stays (27) are secured through a hanger lug (45) to a rear tube (26). The chain stays (27) and the seat tube (22) are connected by right and left paired seat stays (24). As shown in the figure, the seat tube (22), the seat stays (24), the rear tube (28), and the chain stays (27) are arranged generally in a triangular shape to support the weight of the rider. A rear wheel (28) is rotatably attached to a connecting portion between the seat stays (24) and the chain stays (27).

Below the middle lug (44) and the hanger lug (45) is mounted a power unit (34) by way of brackets (46, 47). The power unit (34) includes a human power drive system, an electric motor drive system, and a mechanism for combining the powers of both systems. A crank shaft (33) is attached to the case of the power unit (34). Cranks (32) are attached to both ends of the crank shaft (33). Each of the cranks (32) is provided with a pedal (31). The symbol (36) denotes an electric motor.

Rotation of the crank shaft (33) when the rider depresses the pedals (31) is transmitted through the mechanism in the power unit (34) to a chain (37), and further transmitted through a freewheel (29) to the rear wheel (28) to propel the motor-assisted bicycle by the rotation of the rear wheel (28). On the other hand, when the electric motor (36) is driven, the rotation of its rotor is transmitted through other mechanism in the power unit (34) to the chain (37) to rotate the rear wheel (28). Thus, the motor-assisted bicycle is provided with a drive system to which human power is transmitted through the crank shaft (33) and a drive system using the electric motor (36).

A casing (41) is secured to the lower portion of the main tube (10) holding a controller (42) therein. Current for driving the electric motor (36) is supplied by chargeable batteries (39). The supporting structure for the batteries (39) will be described later. The batteries (39) supply current to the electric motor (36) while the controller regulates the current.

In other words, when the human drive power or the pedal force applied through the pedal (31), the crank (32), and the crank shaft (33) is large, the controller (42) increases the current to the electric motor (36) and reduces the current when the pedal force is small. Thus, the drive force of the electric motor (36) is increased when the burden on the rider is large so that the burden on the rider can be reduced. The electric motor (36) may be for example a permanent magnet type DC motor or a DC series-wound motor. The controller (42) is preferably of a chopper type capable of changing the on-off time ratio (duty ratio) of a DC voltage according to the torque.

FIG. 2 is a side view of the complete motor-assisted bicycle, the vehicle body of the motor-assisted bicycle is provided with a cover (90) over the main tube (10). The cover (90) is made up of an upper cover (91) and a lower cover (92). The upper cover (91) covers the main tube (10), the lower portion of the seat tube (22), the rear tube (26), and the lower portion of an outer box (40) of the batteries (39). The lower cover (92) covers the electric motor (36), and the casing (41). The upper surface of the upper cover (91) is curved along the main tube (10).

The batteries (39) are held in two heights in an inner box (38) which in turn is housed in an outer box (40). The outer box (40) is located between the seat tube (22) and the rear wheel (28), and secured to the seat tube (22), the seat stays (24), and the rear tube (26).

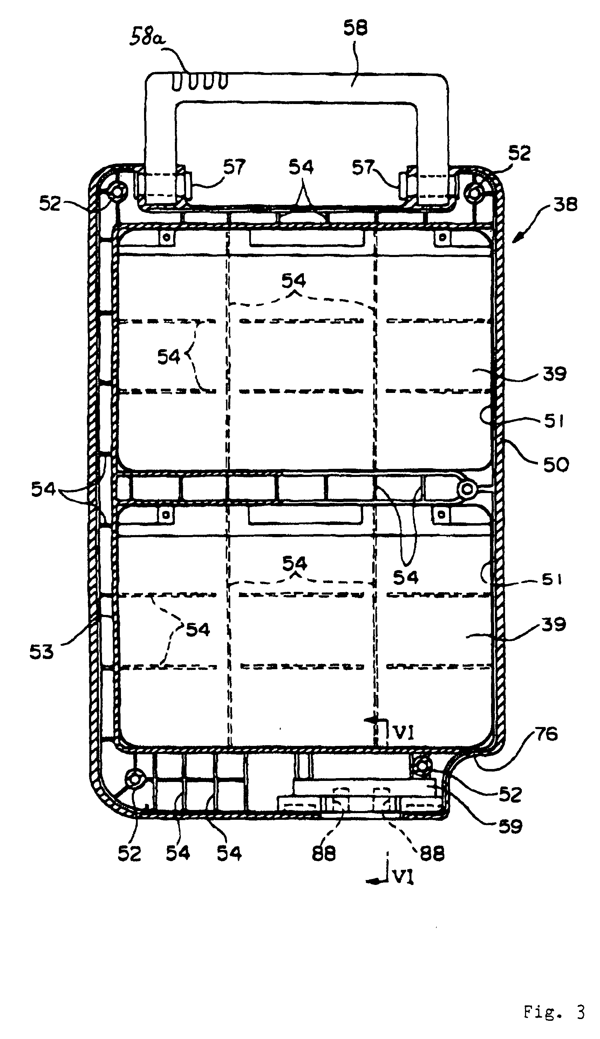

Fig. 3 shows a longitudinal section of the inner box (38). The inner box (38) is made to form a generally rectangular parallelepiped by fitting together two pieces (50) generally symmetric with each other. Each piece (50) is formed with upper and lower holding chambers (51), each holding a battery (39).

In Fig. 3, the surface of the piece (50) to be mated with the corresponding other piece is shown with hatching. In other words, the batteries (39) are fitted into respective holding chambers (51) of the one piece (50), and while mating the hatched surface with the corresponding surface of the other piece and fitting the batteries (39) respectively into the holding chambers (51) of the other piece the batteries (39) are completely held in the inner box (38). Four sleeves (52) are formed in four corners of the piece (50) so that both pieces (50) are joined together by inserting bolts into the sleeves and screwing nuts on the bolt ends.

A hollow space is provided between a wall (53) forming the holding chamber (51) and the outer wall of the piece (50). A number of ribs (54) are formed in the hollow space. A hollow space is also provided between the bottom wall of the upper holding chamber (51) and the top wall of the lower holding chamber (51). A number of ribs (54) are also formed in that hollow space. Thus, even when the inner box (38) is dropped by any chance or when the motor-assisted bicycle with the batteries falls, shocks are damped to reduce damage on the batteries (39) held inside. Furthermore, these spaces are used to route leads connected to the batteries (39).

In a space in the lower portion of the inner box (38) is arranged a terminal plate (59) which will be described later to which are connected the leads described above. The terminal plate (59) is for discharging from the batteries (39) or power supply to the power unit (34) and for charging the batteries (39) when the inner box (38) together with the batteries (39) is taken out of the outer box (40).

At the top portion of the piece (50) is attached a handle (58) by a pin (57) so as to be rotatable about the pin (57). Thus, the handle (58) can be folded or pulled up on the top surface of the piece (50). The top surface of the piece (50) is formed with a recess to receive the handle (58) when it is folded so as not to protude. Said handle (58) comprising marking indications (58a) to facilitate the pre-orientation of the inner box (38) with respect to the outer box (40) for inserting said inner box (38) in correct orientation into the outer box (40).

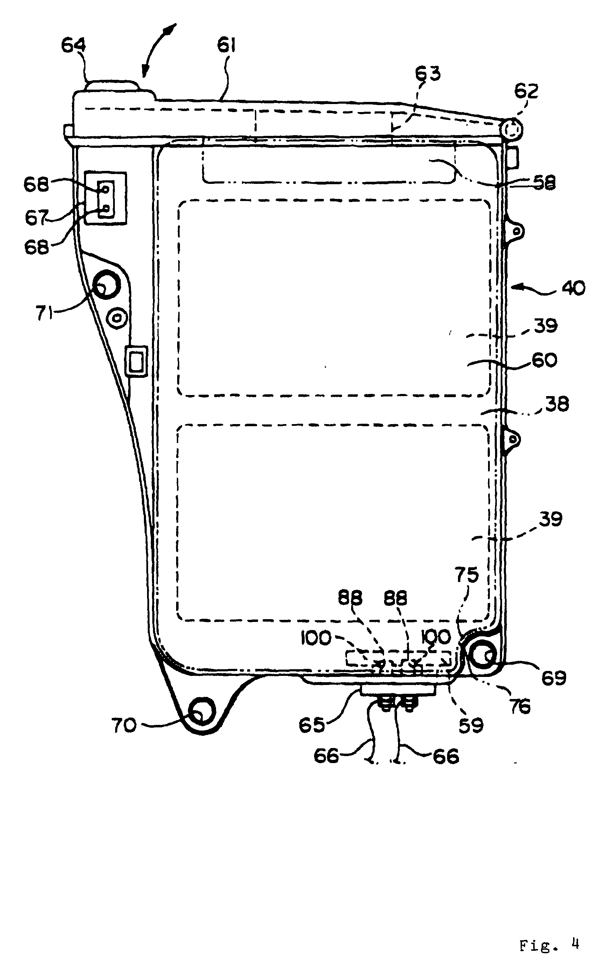

FIG. 4 is a side view of the outer box (40). The outer box (40) has a main body (60) as an open-top box of a generally rectangular parallelepiped shape to receive the inner box (38) inserted from above. The top surface of the outer box (40) is provided with a top lid (61) capable of being opened or closed by rotating about a pin (62) attached to one end of the upper portion of the main body (60). When the top lid (61) is closed, the inside of the outer box (40) is completely isolated from the outside to prevent entry of mud, rainwater or dust and keep the inner box (38) clean.

To the inner side of the top lid (61) is attached a damping member (63) so that the inner box (38) is pressed from above and secured in a fixed position when the top lid (61) is closed. Furthermore, the inner box (38) located inside the outer box (40) is protected from shocks applied from the outside. The symbol (64) denotes an outer cylinder provided with a key hole. Though not shown, a lock box is provided in the upper portion of the main body (60) to be locked by inserting a key into the outer cylinder (64). The key may be the same as that used for starting the power unit (34) and for locking the wheel.

The main body (80) is provided with holes (69, 70, 71). As shown in FIG. 1, the middle lug (44) is formed with a projection (72). The hole (69) is for being screwed down to the projection (72). The hanger lug (45) is also formed with a projection (73) so that the hole (70) is screwed down to it. To the seat stays (24) are attached a securing member (74) so that the hole (71) is screwed down to it.

Since the hole (69) is formed in a corner of the bottom of the outer box (40), a projection (75) is formed at the bottom of the inner space of the outer box (40). The bottom of the inner box (38) is formed with a complementary recess (76) corresponding to the projection (76). This prevents a user from inserting the inner box (38) in wrong orientation into the outer box (40).

On the underside of the bottom of the main body (60) is attached a terminal plate (65) which will be described later to which are connected leads (66) for driving the power unit (34) described before. The terminal plate (65), together with the terminal plate (59) located inside the inner box (38), is for supplying power from the batteries (39) to the power unit (34) by making wiring connection in between.

To a side of the main body (60) is attached a terminal plate (67) for charging only. The terminal plate (67) for charging only is for charging the batteries (39) in the inner box (38) remaining as stored in the outer box (40), and provided with socket holes (68) for receiving a charge plug. Normally when the batteries (39) are not being charged, the socket holes (68) are covered with a rubber cap (not shown).

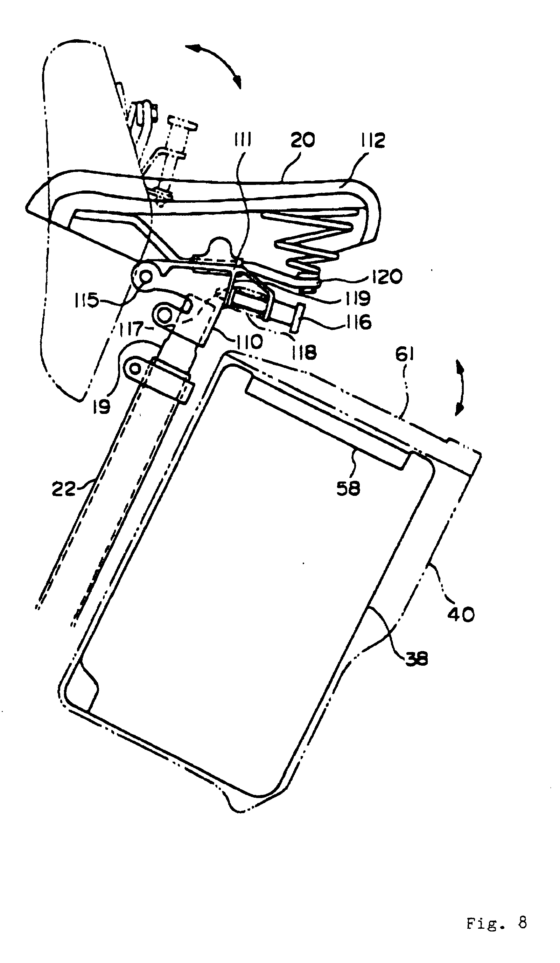

FIG. 8 shows the terminal plate (59) located in the inner box (38) described before. The terminal plate (59) has a base portion (80) secured to the inner box (38), and a socket portion (81) projecting downward from the base portion (80).

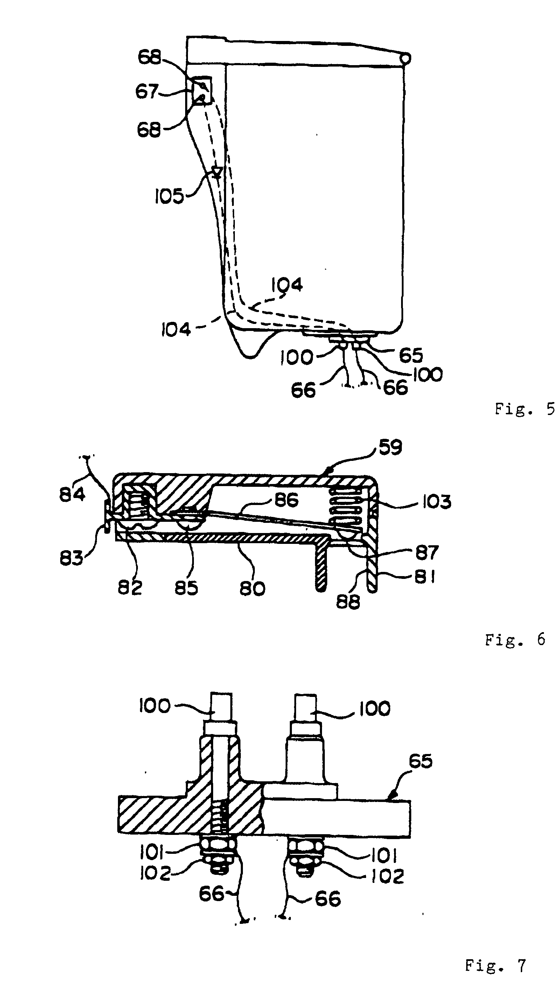

A terminal (83) is screwed with a screw (82) to the base portion (80) and connected by a lead (84) to the positive terminal of the batteries (39). A metallic plate spring (86) is secured with a rivet (85) to the terminal (83) so as to deflect up and down with respect to the rivet (85) as a fixed point. The fore-end of the plate spring (86) is raised with metallic material as a contact point (87). An identical terminal (83) and plate spring (86) are also arranged in a position corresponding to the back of FIG. 6, with its terminal (83) connected through a lead (84) to the negative terminal of the batteries (39).

The socket portion (81) is formed with two socket holes (88) (FIG. 3) which are open downward. The socket holes (88) are arranged so that two terminal plugs (100) (FIG. 7) secured to the terminal plate (65) are inserted respectively.

As shown in FIG. 7. one end of each of the terminal plugs (100) is formed with a male thread. The terminal plugs (100) penetrate the terminal plate (65) and are secured to the terminal plate (65) as nuts (101, 102) are screwed to the male threads. Leads (66) are also connected to the terminal plugs (100) using the nuts (101, 102).

As shown in FIG. 4, when the inner box (38) is inserted into the outer box (40), the upper ends of the terminal plugs (100) enter the socket holes (88) and come into contact with the contact points (87). Thus, power is supplied from the terminal of the batteries (39) through the lead (84), the terminal (83), the plate spring (86), the contact point (87), the terminal plug (100), and the lead (66) to the power unit (34).

Inside the base portion (80) of the terminal plate (59) is arranged a coil spring (103) to exert a downward force on the plate spring (86) to maintain contact between the terminal plug (100) and the contact point (87) when the terminal plug (100) enters the socket hole (88).

After the inner box (38) is taken out of the outer box (40), the batteries (39) are charged by inserting terminal plugs of a charger into the socket holes (88). On the other hand, the battery holding structure is so arranged that the batteries (39) can be charged while the inner box (38) is held in the outer box (40) if the terminal plugs of the charger are inserted into the socket holes (68) in the terminal plate (67) for charging only.

FIG. 5 is a schematic drawing to show wiring to the socket holes (68). Sockets (68) are respectively connected by leads (104) to the terminal plugs (100). Since the batteries (39) are connected to the terminal plugs (100) when the inner box (38) is held in the outer box (40), the batteries (39) are also connected to the socket holes (68).

In this case, since the voltage of the batteries (39) is applied to the terminal plugs (100), and the same voltage is also applied directly to the leads (104), there is a possibility of short circuit between metallic parts. Therefore, a diode (105) is interposed in the middle of one lead (104) to prevent the short circuit. The interposition of the diode (105) also prevents electricity of the batteries (39) from being stolen from the socket holes (68).

As described before, the outer box (40) is arranged between the seat tube (22) and the rear wheel (28). This embodiment is arranged so that the inner box (38) can be easily taken out of the outer box (40) by opening the lid (61) even when the seat (20) is adjusted to a low position. FIG. 8 shows the attachment structure for the seat (20). The seat (20) has a support portion (110) secured to the seat post (20), a rotating portion (111) attached for free rotation to the support portion (110), and a seat portion (112) for the rider to be seated.

The rotating portion (111) is rotatable about a pin (115) attached to the support portion (110). An engagement stop pin (116) is attached on the opposite side of the pin (115) of the rotary portion (111). One end of the engagement stop pin (116) is inserted into a hole (117) formed in the support portion (110). The engagement stop pin (116) is constantly forced by a coil spring (118) toward the support portion (110). The symbol (119) denotes an intermediate plate for supporting the engagement stop pin (116). A base portion (120) of the seat portion (112) is secured to the rotating portion (111).

Here, if the engagement stop pin (118) is pulled against the urging force of the coil spring (118) in the direction apart from the support portion (110), the engagement stop pin (116) is drawn out of the hole (117). Thus, the rotating portion (111) rotates together with the seat portion (112) about the pin (115). When the seat portion (112) is tilted forward as shown with phantom lines, there is nothing in the way above the outer box (40). Thus, the top lid (61) of the outer box (40) can be opened so that the inner box (38) can be inserted into or taken out of the outer box (40).

Next will be described the function of charging the batteries (39) using the battery holding structure of this embodiment. First, when a location where the motor-assisted bicycle is stored is distant from a power source, the inner box (38) holding the batteries (39) is brought by hand to the location of the power source. In this case as described before, the seat portion (112) of the seat (20) is tilted forward, the top lid (61) is unlocked and opened, and the inner box (38) is taken out of the outer box (40) by gripping the handle (58).

Then, the terminal plug of the charger is inserted into the socket holes (88) of the inner box (38) to perform charging. In the state of being mounted on the vehicle, since the inner box (38) is held in the outer box (40), it is prevented from being soiled by mud or dust. Therefore, the batteries (39) which is taken out, together with the inner box (38) as it is clean, from the vehicle can be brought into a house or the like to charge the batteries (39).

Since the top lid (61) of the outer box (40) is locked after the inner box (38) is taken out, while the batteries (39) are being charged, rain water or dust is prevented from finding its way into the outer box (40) to prevent electric connections of the vehicle or the terminal plugs (100) from deteriorating. The locking of the top lid (61) also prevents the inside of the outer box (40) from being tampered.

When the charging of the batteries (39) is over, the top lid (61) is unlocked and opened, and the inner box (38) is replaced into the outer box (40). Thus, the batteries can be easily and securely installed into the vehicle. In this case as described before, the terminal plugs (100) are inserted into the socket holes (88) of the inner box (38). This makes wiring connection between the batteries (39) and the vehicle with ease and reliability.

After the inner box (38) is installed, the top lid (61) of the outer box (40) is closed and locked. As described above, since the top lid is closed tightly and the electrical connection between the batteries (39) and the power unit (34) or the insertion of the terminal plugs (100) into the socket holes (88) is performed within the outer box (40), the connection is prevented from being wetted by rain water or soiled by dust, thereby preventing its deterioration. Furthermore, since the batteries (39) are doubly surrounded by the outer box (40) and the inner box (38), possible damage on the batteries is reduced by damping shocks as when the motor-assisted bicycle falls.

Furthermore, since the terminal plate (67) for charging only is provided on the outer box (40), the batteries (39) can be charged as they are in the inner box (38) on the vehicle. In this case, charging is made by inserting the terminal plug of the charger into the socket holes (68). This makes it possible, if a power source is near the location where the motor-assisted bicycle is stored, to charge the batteries (39) without taking the inner box (38) out of the outer box (40).

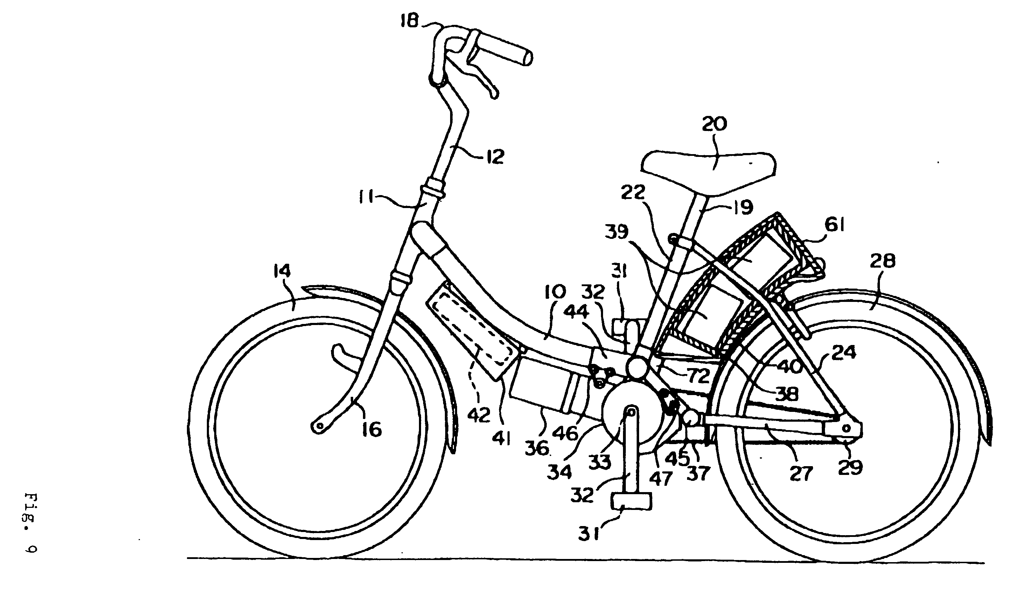

FIG. 9 shows a modification of the embodiment described above. In the previous embodiment, the inner box (38) of a generally parallelepiped shape is held inside the outer box (40) of a generally parallelepiped shape. However, the shape of those boxes is not limited to that. It may also be arranged as shown in FIG. 9 in which an inner box (38) having arcuate front and back surfaces is inserted into an outer box (40) also having arcuate front and back surfaces. In this modified embodiment as shown in the figure, since the top lid (61) of the outer box (40) can be arranged to avoid the location immediately below the seat (20), unlike the previous embodiment, the inner box (38) can be taken out easily without tilting forward the seat portion of the seat (20).

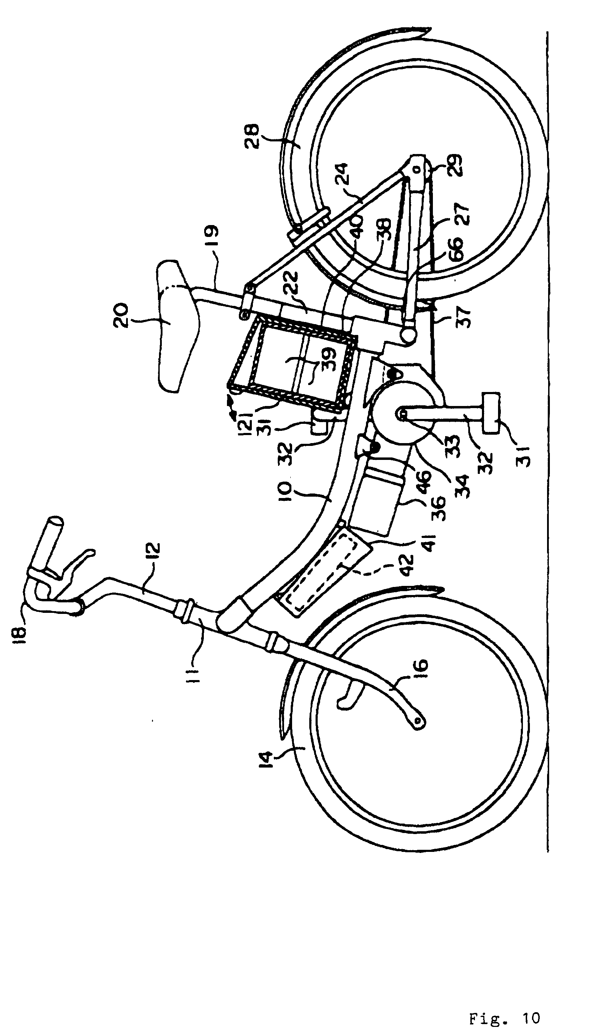

FIG. 10 shows still another modified embodiment. While the outer box (40) is arranged behind the seat tube (22) in the previous embodiment, in this embodiment the outer box (40) is located in front of the seat tube (22), and the outer box (40) is supported by the seat tube (22) and the main tube (10). In this case, a lid (121) is preferably provided in the front portion of the outer box (40) so that entry and exit of the inner box (38) is made from the front of the outer box (40). However, it may also be arranged that a lid (61) similar to that described above is provided and the seat portion of the seat (20) is tilted backward in opposition to the previous embodiment.

Furthermore in the embodiment shown in FIG. 10, it is possible to curtail the rear portion of the seat (20) as shown with phantom lines. In this case, the inner box (38) can be taken out by loosening tightening between the seat post (19) and the seat tube (22), turning the seat post (19) by 180 degrees so that the space above the outer box (40) is cleared, and opening the lid (61).

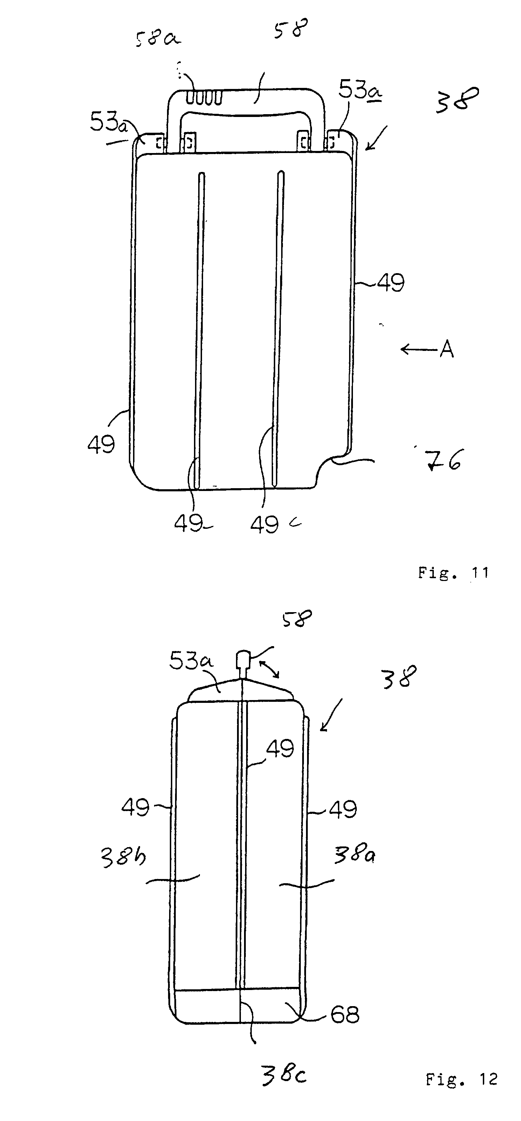

Still a further embodiment is shown in figs. 11 and 12. In order to facilitate the insertion of the inner box (38) into the outer box (40) the inner box comprises longitudinal ribs (49), adapted to extend in the direction of insertion of the inner box (38) into the outer box (40). These ribs (49) reinforce the inner box (38) as well as reduce the frictional force applied to the inner box during insertion.

As can be seen in figs. 11 and 12 the pins (57) (fig. 3) pivotably fixing said handle (58) are arranged in a space formed by two wall portions (53a) the upper periphery edges of them abutting at the top of the inner box (38).

As is apparent from fig. 12, the inner box (38) may be composed of two halves (38a,38b) fixed to each other along the line (38c).

While the embodiments described above are applications of the battery holding structures to the motor-assisted bicycle, this invention is not limited to such embodiments but the same structures may be applied to motor-operated vehicles and motorcycles.

As described above, according to the invention of claim 1, the inner box is protected from soiling by mud and dust, and thereby the inner box together with the batteries as remaining clean can be brought into the house. The batteries can be mounted on the vehicle easily and reliably by simply putting the inner box into the outer box. It is also possible to protect the batteries from shocks as when the vehicle falls.

According to the invention of claim 2, the electrical connections are prevented from being wetted with rain water and covered with dust, thereby preventing the electrical connections from deteriorating.

According to the invention of claim 3, rain water and dust are prevented from entering the outer box after the inner box together with the batteries is taken out of the outer box, thereby preventing the electrical connections from deteriorating. Furthermore, by locking the lid, the inside of the outer box is prevented from being tampered.

According to the invention of claim 4, the batteries can be charged not only when they are removed from the vehicle but also when they are mounted on the vehicle.

## Claims

1. A battery holding structure for a vehicle, in particular a power-assisted bicycle, comprising:
at least one battery (39),
an inner box (38) for accommodating said at least one battery (39),
an outer box (40) for supporting said inner box (38) when inserted into the outer box (40), said outer box (40) being adapted to be secured to said vehicle and electrically connectable to a power unit (34) of said vehicle,
**characterized in that**
the outer box (40) has a one side open main body (60) to receive the inner box (38) inserted through the open side and a lid (61, 121) for closing said open side so as to completely isolate the inside of the outer box (40) from the outside.

2. A battery holding structure as claimed in claim 1, **characterised in that** said outer box (40) comprises an electrical supply terminal (65) adapted to be electrically connectable to the power unit (34).

3. A battery holding structure as claimed in claim 1 or 2, **characterised in that** the inner and outer boxes (38,40) comprise electrical connecting means (59,88;65,100) for electrically connecting both boxes (38,40) with each other when said inner box (38) is inserted into said outer box (40).

4. A battery holding structure as claimed in at least one of the preceding claims 1 to 3, **characterised in that** said outer box (40) comprising an electrical terminal (67,68) adapted to be connected to an external battery charging means for recharging at least one battery (39) disposed in said inner box (38) with said inner box (38) being accommodated in said outer box (40).

5. A battery holding structure as claimed in claim 4, **characterised in that** said electrical terminal (67,68) being electrically connected to the outer electrical supply terminal (65) of the outer box (40).

6. A battery holding structure as claimed in at least one of the preceding claims 1 to 5, **characterised in that** said lid (61,121) is lockable for closing the main body (60) of the outer box (40) having a substantially rectangular, parallelepiped shape or having arcuate front and/or back surfaces, respectively.

7. A battery holding structure as claimed in at least one of the preceding claim 1 or 6, **characterised in that** said inner box (38) is adapted to the shape of the outer box (40), said inner box (38) being composed of two pieces (50) for assembling to each other, each of the pieces (50) comprising upper and lower holding chambers (51) for accommodating batteries (39) therein.

8. A battery holding structure as claimed in claim 7, **characterised in that** said inner box (38) comprising a double-wall structure comprising shock absorption means (54) between an outer wall and an inner wall (53) of the inner box (38).

9. A battery holding structure according to at least one of the preceding claims 3 to 8, **characterised in that** said electrical connecting means between the inner and outer boxes (38,40) comprising a first terminal plate (59) and socket holes (88) located in the inner box (38) and terminal plugs (100) adapted to engage said socket holes (88) and being secured to a second terminal plate (65) are provided in connection with said outer box (40) so that upper ends of said terminal plugs (100) are received by the socket holes (88) when the inner box (38) is completely inserted into said outer box (40).

10. A battery holding structure according to claim 9 **characterised in that** said first terminal plate (59) has a base portion (80) secured to the inner box (38) and a socket portion (81) projecting downwards from the base portion (80),
two terminals (83) are fastened to the based portion (80) and connected by leads (84) to terminals of said least one battery (39), and
two metallic plate springs (86) are secured to the respective terminals (83) each having a contact point (87) at a deflectable end.

11. A battery holding structure according to claim 9 or 10, **characterised in that** said terminal plugs (100) are provided with male threads and being secured to said second terminal plate (65) by nuts (101,102) engaging said threads outside said outer box (40) whereby leads (66) are also fastened by said nuts (101,102) leading to said power unit (34).

12. A battery holding structure according to at least one of the preceding claims 1 to 11, **characterised in that** said outer box (40) and said inner box (38) comprising means (75,76) preventing a complete insertion of the inner box (38) with an improper orientation.

13. A battery holding structure according to at least one of the preceding claims 9 to 11, **characterised in that** one of the leads (104) coupling said electrical terminal (67,68) with terminal plugs (100) of said connecting means (59,88;65,100) is provided with a diode (105) to prevent a short circuit as well as an unauthorised draw current.

14. A battery holding structure according to at least one of the preceding claims 1 to 13, **characterised in that** said outer box (40) is provided with means (69,70,71) for fastening said outer box (40) to said vehicle.

15. A battery holding structure as claimed in at least one of the preceding claims 1 to 14, **characterised in that** the inner box (38) comprises longitudinal ribs (49), adapted to extend in the direction of insertion of the inner box (38) into the outer box (40).

16. A battery holding structure as claimed in at least one of the preceding claims 1 to 15, **characterised in that** a handle (58a) is rotatably supported at a top portion of the inner box (38), said handle (58) comprising marking indications (58a) to facilitate the pre-orientation of the inner box (38) with respect to the outer box (40) for inserting said inner box (38) in correct orientation into the outer box (40).

17. A vehicle with a battery holding structure according to at least one of the preceding claims 1 to 16, **characterised in that** the shape of said outer box (14) is adapted to an accommodation space of said vehicle.

18. A vehicle with a battery holding structure as claimed in claim 17, **characterised in that** the vehicle is a motor-assisted bicycle comprising a cover (90) over a main tube (10), said cover (90) comprising an upper cover (91) and a lower cover (92), said upper cover (91) covering the main tube (10), a the lower portion of a seat tube (22) and rear tube (26) and lower portion of the outer box (40) of the battery (39), while the lower cover (92) covers an electric motor (36) and a casing of a controller (42).

## Patentansprüche

1. Batteriehalterungsstruktur für ein Fahrzeug, insbesondere für ein motorunterstütztes Fahrrad, mit:
zumindest einer Batterie (39),
einer inneren Box (38) zur Aufnahme der zumindest einen Batterie (39),
einer äußeren Box (40), zum Lagem der inneren Box (38), wenn diese in die äußere Box (40) eingesetzt ist, wobei die äußere Box (40) vorgesehen ist, an dem Fahrzeug befestigt zu werden und elektrisch verbindbar mit einer Motoreinheit (34) des Fahrzeuges zu sein,
**dadurch gekennzeichnet, daß**
die äußere Box (40) einen einseitig offenen Hauptkörper (60) hat, um die innere Box (38), eingesetzt durch die offene Seite, aufzunehmen und einen Deckel (61, 121) zum Schließen der offenen Seite, um so die Innenseite der äußeren Box (40) von der Außenseite vollständig zu isolieren.

2. Batteriehalterungsstruktur, wie in Anspruch 1 beansprucht, **dadurch gekennzeichnet, daß** die äußere Box (40) einen elektrischen Versorgungsanschluß (65) aufweist, vorgesehen um mit der Motoreinheit (34) elektrisch verbindbar zu sein.

3. Batteriehalterungsstruktur, wie in Anspruch 1 oder 2 beansprucht, **dadurch gekennzeichnet, daß** die innere und die äußere Box (38, 40) elektrische Verbindungsmittel (59, 88; 65, 100) zum elektrischen Verbinden beider Boxen (38, 40) aufweisen, wenn die innere Box (38) in die äußere Box (40) eingesetzt ist.

4. Batteriehalterungsstruktur, wie in zumindest einem der vorhergehenden Ansprüche 1 bis 3 beansprucht, **dadurch gekennzeichnet, daß** die äußere Box (40) einen elektrischen Anschluß (67, 68) aufweist, vorgesehen um mit einem externen Batterieladegerät zum Wiederaufladen zumindest einer Batterie (39) verbunden zu sein, angeordnet in der inneren Box (38), wobei die innere Box (38) in der äußeren Box (40) aufgenommen ist.

5. Batteriehalterungsstruktur, wie in Anspruch 4 beansprucht, **dadurch gekennzeichnet, daß** der elektrische Anschluß (67, 68) mit dem äußeren elektrischen Versorgungsanschluß (65) der äußeren Box (40) verbunden ist.

6. Batteriehalterungsstruktur, wie in zumindest einem der vorhergehenden Ansprüche 1 bis 5 beansprucht, **dadurch gekennzeichnet, daß** der Deckel (61, 121) zum Schließen des Hauptkörpers (60) der äußeren Box (40) verriegelbar ist, die eine im wesentlichen rechteckige, parallelepipedförmige Gestalt, oder jeweils gewölbte Vorder- und /oder Rückoberflächen hat.

7. Batteriehalterungsstruktur, wie in zumindest einem der vorhergehenden Ansprüche 1 bis 6 beansprucht, **dadurch gekennzeichnet, daß** die innere Box (38) an die Form der äußeren Box (40) angepaßt ist, wobei die innere Box (38) aus zwei Stücken (50) zum miteinander Zusammenfügen zusammengesetzt ist, wobei jedes der Stücke (50) eine obere und eine untere Haltekammer (51) aufweist, um darin Batterien (39) unterzubringen.

8. Batteriehalterungsstruktur, wie in Anspruch 7 beansprucht, **dadurch gekennzeichnet, daß** die innere Box (38) einen Doppelwandaufbau mit einer Stoßabsorptionseinrichtung (54) zwischen einer äußeren Wand und einer inneren Wand (53) der inneren Box (38) aufweist.

9. Batteriehalterungsstruktur nach zumindest einem der vorhergehenden Ansprüche 3 bis 8, **dadurch gekennzeichnet, daß** die elektrische Verbindungseinrichtung zwischen der inneren und der äußeren Box (38, 40) eine erste Anschlußplatte (59) und Steckerlöcher (88), angeordnet in der inneren Box (38) und Anschlußstecker (100), vorgesehen, um mit den Steckerlöchem (88) in Eingriff zu sein, aufweisen, die an einer zweiten Anschlußplatte (65) befestigt sind, und in Verbindung mit der äußeren Box (40) vorgesehen sind, so daß obere Enden der Anschlußstecker (100) durch die Steckerlöcher (88) aufgenommen sind, wenn die innere Box (38) vollständig in die äußere Box (40) eingesetzt ist.

10. Batteriehalterungsstruktur nach Anspruch 9, **dadurch gekennzeichnet, daß** die erste Anschlußplatte (59) einen Basisabschnitt (80) hat, befestigt an der inneren Box (38) und einen Steckerabschnitt (81), der abwärts von dem Basisabschnitt (80) vorspringt, zwei Anschlüsse (83) an dem Basisabschnitt (80) befestigt sind und durch Leitungen (84) zu Anschlüssen der zumindest einen Batterie (39) verbunden sind, und zwei metallische Plattenfedern (86) an den jeweiligen Anschlüssen (83) befestigt sind, die jeweils einen Kontaktpunkt (87) an einem abbiegbaren Ende haben.

11. Batteriehalterungsstruktur nach Anspruch 9 oder 10, **dadurch gekennzeichnet, daß** die Anschlußstecker (100) mit Außengewinde versehen sind und an der zweiten Anschlußplatte (65) durch Muttern (101, 102) befestigt sind, die mit dem Gewinde außerhalb der äußeren Box (40) im Eingriff sind, wodurch Leitungen (66), die zu der Motoreinheit (34) führen, auch durch die Muttern (101, 102) befestigt sind.

12. Batteriehalterungsstruktur nach zumindest einem der vorhergehenden Ansprüche 1 bis 11, **dadurch gekennzeichnet, daß** die äußere Box (40) und die innere Box (38) Mittel (75, 76) aufweisen, die ein vollständiges Einsetzen der inneren Box (38) mit einer unrichtigen Ausrichtung verhindern.

13. Batteriehalterungsstruktur nach zumindest einem der vorhergehenden Ansprüche 9 bis 11, **dadurch gekennzeichnet, daß** eine der Leitungen (104), die den elektrischen Anschluß (67, 68) mit Anschlußsteckem (100) der Verbindungseinrichtung (59, 88; 65, 100) kuppeln, mit einer Diode (105) versehen ist, um einen Kurzschluß sowie eine nichtgenehmigte Stromentnahme zu verhindern.

14. Batteriehalterungsstruktur nach zumindest einem der vorhergehenden Ansprüche 1 bis 13, **dadurch gekennzeichnet, daß** die äußere Box (40) mit einer Einrichtung (69, 70, 71) zum Befestigen der äußeren Box (40) an dem Fahrzeug versehen ist.

15. Batteriehalterungsstruktur, wie in zumindest einem der vorhergehenden Ansprüche 1 bis 14 beansprucht, **dadurch gekennzeichnet, daß** die innere Box (38) Längsrippen (49) aufweist, vorgesehen um sich in die Richtung des Einsetzens der inneren Box (38) in die äußere Box (40) zu erstrecken.

16. Batteriehalterungsstruktur, wie in zumindest einem der vorhergehenden Ansprüche 1 bis 15 beansprucht, **dadurch gekennzeichnet, daß** ein Handgriff (58a) drehbar an einem oberen Abschnitt der inneren Box (38) gelagert ist, wobei der Handgriff (58) Markierungszeichen (58a) aufweist, um die Vororientierung der inneren Box (38) in Bezug auf die äußere Box (40) zum Einsetzen der inneren Box (38) in richtiger Ausrichtung in die äußere Box (40) zu erleichtern.

17. Fahrzeug mit einer Batteriehalterungsstruktur nach zumindest einem der vorhergehenden Ansprüche 1 bis 16, **dadurch gekennzeichnet, daß** die Form der äußeren Box (14) an einen Unterbringungsraum des Fahrzeuges angepaßt ist.

18. Fahrzeug mit einer Batteriehalterungsstruktur, wie in Anspruch 17 beansprucht, **dadurch gekennzeichnet, daß** das Fahrzeug ein motorunterstütztes Fahrrad ist, mit einer Verkleidung (90) über einem Hauptrohr (10), wobei die Verkleidung (90) eine obere Verkleidung (91) und eine untere Verkleidung (92) aufweist, wobei die obere Verkleidung (91) das Hauptrohr (10), den unteren Abschnitt eines Sitzrohres (22) und ein Rückrohr (26) und einen unteren Abschnitt der äußeren Box (40) der Batterie (39) abdeckt, während die untere Verkleidung (92) einen Elektromotor (36) und ein Gehäuse einer Steuerung (42) abdeckt.

## Revendications

1. Une structure de support de batterie pour un véhicule, en particulier une bicyclette à assistance motrice, comprenant :
au moins une batterie (39),
un boîtier intérieur (38) pour loger ladite au moins une batterie (39),
un boîtier extérieur (40) pour supporter ledit boîtier intérieur (38) lorsqu'il est inséré dans le boîtier extérieur (40), ledit boîtier extérieur (40) étant adapté pour être fixé sur ledit véhicule et être susceptible d'être relié électriquement à une unité de puissance (34) dudit véhicule,
**caractérisée en ce que**
le boîtier extérieur (40) comprend un corps principal (60) ouvert sur un côté, afin de recevoir le boîtier intérieur (38) inséré par le côté ouvert, et un couvercle (61, 121) pour former ledit côté ouvert, de manière à complètement isoler l'intérieur du boîtier extérieur (40) vis à vis de l'extérieur.

2. Une structure de support de batterie selon la revendication 1, **caractérisée en ce que** ledit boîtier extérieur (40) comprend une borne d'alimentation électrique (65) adaptée pour être reliée électriquement à l'unité de puissance (34).

3. Une structure de support de batterie selon la revendication 1 ou 2, **caractérisée en ce que** les boîtiers intérieur et extérieur (38, 40) comprennent des moyens de liaison électriques (59, 88; 65, 100) pour relier électriquement les deux boîtiers (38, 40) l'un à l'autre lorsque ledit boîtier intérieur (38) est inséré dans ledit boîtier extérieur (40).

4. Une structure de support de batterie selon au moins l'une des revendications 1 à 3 précédentes, **caractérisée en ce que** ledit boîtier extérieur (40) comprend une borne électrique (67, 68) adaptée pour être reliée à des moyens externes de chargement de batterie, pour recharger au moins une batterie (39) disposée dans ledit boîtier intérieur (38), ledit boîtier intérieur (38) étant logé dans ledit boîtier extérieur (40).

5. Une structure de support de batterie selon la revendication 4, **caractérisée en ce que** ladite borne électrique (67, 68) est reliée électriquement à la borne d'alimentation électrique extérieure (65) du boîtier extérieur (40).

6. Une structure de support de batterie selon au moins l'une des revendications précédentes, **caractérisée en ce que** ledit couvercle (61, 121) est verrouillable pour fermer le corps principal (60) du boîtier extérieur (40) ayant une forme parallélépipédique, sensiblement rectangulaire, ou ayant des surfaces avant et/ou arrière arquées, respectivement.

7. Une structure de support de batterie selon au moins l'une des revendications 1 ou 6 précédentes, **caractérisée en ce que** ledit boîtier intérieur (38) est adapté à la forme du boîtier extérieur (40), ledit boîtier intérieur (38) étant composé de deux pièces (50) devant s'assembler l'une à l'autre, chacune des pièces (50) comprenant des chambres de logement supérieure et inférieure (51) pour y recevoir des batteries (39).

8. Une structure de support de batterie selon la revendication 7, **caractérisée en ce que** ledit boîtier intérieur (38) comprend une structure à double paroi comprenant des moyens d'absorption de choc (54) entre une paroi extérieure et une paroi intérieure (53) du boîtier intérieur (38).

9. Une structure de support de batterie selon au moins l'une des revendications 3 à 8 précédentes, **caractérisée en ce que** lesdits moyens de liaison électriques entre les boîtiers intérieur et extérieur (38, 40) comprennent une première plaque de borne (59) et des trous à prise femelle (88), placés dans le boîtier intérieur (38), et des bouchons de borne (100), adaptés pour venir en prise avec lesdits trous à prise femelle (88) et être fixés sur une deuxième plaque terminale (65), sont prévus en liaison avec ledit boîtier extérieur (40), de manière que les extrémités supérieures desdits bouchons de borne (100) soient logées par les trous à prise femelle (88) lorsque le boîtier intérieur (38) est complètement inséré dans ledit boîtier extérieur (40).

10. Une structure de support de batterie selon la revendication 9, **caractérisée en ce que** ladite première plaque de borne (59) a une partie de base (80) fixée sur le boîtier intérieur (38) et une partie à prise femelle (81) faisant saillie vers le bas depuis la partie de base (80),
deux bornes (83) sont fixées sur la partie de base (80) et reliées par des conducteurs (84) à des bornes de ladite au moins une batterie (39), et
deux ressorts à lame (86) métalliques sont fixés sur les bornes (83) respectives ayant chacune un point de contact (87) à une extrémité déformable.

11. Une structure de support de batterie selon la revendication 9 ou 10, **caractérisée en ce que** lesdits bouchons de borne (100) sont pourvus de filetage mâle et sont fixés sur ladite deuxième plaque de borne (65) par des écrous (101, 102) venant en prise avec lesdits filetages à l'extérieur dudit boîtier extérieur (40) de manière que les conducteurs (66) soient également fixés par lesdits écrous (101, 102) menant à ladite unité de puissance (34).

12. Une structure de support de batterie selon au moins l'une des revendications 1 à 11 précédentes, **caractérisée en ce que** ledit boîtier extérieur (40) et ledit boîtier intérieur (38) comprennent des moyens (75, 76) empêchant une insertion complète du boîtier intérieur (38) à une orientation incorrecte.

13. Une structure de support de batterie selon au moins l'une des revendications 9 à 11 précédentes, **caractérisée en ce que** l'un des conducteurs (104) couplant ladite borne électrique (67, 68) à des bouchons de borne (100) desdits moyens de connexion (59, 88; 65, 100) est muni d'une diode (105) pour empêcher tout court-circuit ainsi que tout prélèvement non autorisé de courant.

14. Une structure de support de batterie selon au moins l'une des revendications 1 à 13 précédentes, **caractérisée en ce que** ledit boîtier extérieur (40) est muni de moyens (69, 70, 71) pour la fixation dudit boîtier extérieur (40) sur ledit véhicule.

15. Une structure de support de batterie selon au moins l'une des revendications 1 à 14 précédentes, **caractérisée en ce que** le boîtier intérieur (38) comprend des nervures longitudinales (49) adaptées pour s'étendre dans la direction de l'insertion du boîtier intérieur (38) dans le boîtier extérieur (40).

16. Une structure de support de batterie selon au moins l'une des revendications 1 à 15 précédentes, **caractérisée en ce qu'**une manette (58a) est supportée à rotation en une partie supérieure du boîtier intérieur (38), ladite manette (58) comprenant des indications de marquage (58a) pour faciliter la préorientation du boîtier intérieur (38) par rapport au boîtier extérieur (40), pour insertion dudit boîtier intérieur (38) à une orientation correcte à l'intérieur dudit boîtier extérieur (40).

17. Un véhicule muni d'une structure de support de batterie selon au moins l'une des revendications 1 à 16 précédentes, **caractérisé en ce que** la forme dudit boîtier extérieur (14) est adaptée à un espace de logement dudit véhicule.

18. Un véhicule muni d'une structure de support de batterie selon la revendication 17, **caractérisé en ce que** le véhicule est une bicyclette à assistance motrice comprenant un couvercle (90) sur un tube principal (10), ledit couvercle (90) comprenant un couvercle supérieur (91) et un couvercle inférieur (92), ledit couvercle supérieur (91) couvrant le tube principal (10), la partie inférieure d'un tube de siège (22) et le tube arrière (26) et la partie inférieure du boîtier extérieur (40) de la batterie (39), tandis que le couvercle inférieur. (92) couvre un moteur électrique (36) et un boîtier d'un contrôleur (42).
